# NEUE EUROPÄISCHE PATENTSCHRIFT

(11) **EP 0 530 727 B2**
(45) Veröffentlichungstag und Bekanntmachung des Hinweises auf die Entscheidung über den Einspruch: **24.10.2001**
(45) Hinweis auf die Patenterteilung: 24.05.1995
(21) Anmeldenummer: 92114852.4
(22) Anmeldetag: 31.08.1992
(51) Int. Cl.: F24H 9/20, G05D 23/19

(54) **Wärmespeicherheizgerät**
Storage heater
Appareil de chauffage à accumulation

(30) Priorität: 31.08.1991 DE 4128985
(43) Veröffentlichungstag der Anmeldung: 10.03.1993
(73) Patentinhaber: KKW Kulmbacher Klimageräte-Werk GmbH, D-95326 Kulmbach (DE)
(72) Erfinder: Kaim, Leo, W-8647 Stockheim (DE)
(74) Vertreter: Tergau, Enno, Dipl.-Ing.

(56) Entgegenhaltungen:
- EP-A- 0 132 683
- DE-A- 3 427 523
- DE-A- 3 525 315
- DE-A- 3 823 388
- DE-B- 2 539 065
- DE-B- 2 539 117

## Beschreibung

Die Erfindung betrifft ein Wärme-Speicherheizgerät mit den Merkmalen des Oberbegriffes des Anspruches 1.

Derartige Wärme-Speicherheizgeräte sind grundsätzlich bekannt. Sie weisen z.B. einen keramischen Wärme-Speicherkern auf, der sich in einem im wesentlichen allseits geschlossenen Außengehäuse befindet. Beim Betrieb des Speicherheizgerätes wird während der Nachttarif-Periode der Speicherkern aufgeheizt. Da der Speicherkern aus Werkstoffen mit hoher spezifischer Wärme meist aus Magnesia-Steinen besteht, ist er in der Lage, eine relativ große Wärmemenge aufzunehmen. Diese Wärme wird später während des Tages langsam an den zu heizenden Raum abgegeben. Es geschieht dies, indem ein Luftstrom mit Hilfe eines Gebläses über den Speicherkern geführt und dabei von diesem aufgeheizt wird.

Die Auf- bzw. Nachladung des Speicherkerns geschieht mittels einer Aufladesteuerung. Derartige Aufladesteuerungen sind in DIN 44574 beschrieben. Ein Bestandteil der Aufladesteuerung ist ein Aufladeregler. Aufladeregler sind dafür konstruiert, von einem die Außentemperatur einspiegelnden Signal beaufschlagt zu werden, um die Menge der aufzuladenden Wärme dem bei der anstehenden Außentemperatur herrschenden Bedarf anzupassen. Sie sind in thermomechanischer und auch in elektronischer Form vorbekannt und ebenfalls in DIN 44574 beschrieben.

Aus **DE-A-3 525 315** ist ein Wärme-Speicherheizgerät mit einem Aufladeregler als Bestandteil der Aufladesteuerung bekannt. Mit Hilfe eines motorgetriebenen Gebläses wird dem Speicherkern Wärmeenergie entzogen und dem aufzuheizenden Raum zugeführt. Das Auflade- und Nachladeverhalten des vorbekannten Speicherheizgerätes ist unter anderem von der im Speicherkern enthaltenen Restwärme bzw. dessen Wärmeinhalt abhängig.

Ein Nachteil des vorbekannten Aufladereglers ist, daß die Temperaturfühler für den Wärmeinhalt des Speicherkerns, bezogen auf die Abmessungen des Speicherkerns selbst, im wesentlichen als punktförmig zu bezeichnen sind. Der Fühler muß deshalb an einem repräsentativen Punkt des Speicherkerns angebracht werden.
Die Anbringung mehrerer Fühler zur Temperaturmittelung ist zwar technisch möglich, kostenmäßig jedoch mit erheblichem Aufwand verbunden.

Die Speicherheizgeräte sind ständig einem veränderlichen Betrieb, bestehend aus den Details Aufladung, Entspeicherung mit oder ohne Gebläseunterstützung und Kombinationen daraus unterworfen. Daraus ergeben sich auch bei sorgfältiger Wahl des Fühlerkoppelpunktes durch zeitlich verzögerndes Materialverhalten Unterschiede zwischen tatsächlichem Wärmeinhalt und gemessener punktförmig anstehender Temperatur.
Diese Abweichungen können erhebliche Ausmaße annehmen, die zur Über- bzw. Unterdeckung des Heizbedarfes führen können. Dies ist vor allem dann der Fall, wenn innerhalb eines Tages mehrere Aufladeperioden von den EVU gewährt werden.

Ausgehend von diesen Nachteilen liegt der Erfindung die Aufgabe zugrunde, Fehlinformationen an der Fühlerkoppelstelle zu vermeiden, um das Auf- und Nachladeverhalten des Speicherheizgerätes besser an den tatsächlichen Wärmeinhalt des Speicherkerns anzupassen.

Diese Aufgabe ist durch die Merkmalskombination des Anspruches 1 gelöst.

Dadurch werden Fehlinterpretationen des Aufladereglers kompensiert. Über- bzw. Unterdeckungen des Heizbedarfes werden vermieden. Dies ermöglicht eine gleichmäßige Arbeitsweise des Speicherheizgerätes, wodurch die Lebensdauer seiner Bestandteile erhöht ist.
Die Anpassung des Ladeverhaltens des Speicherheizgerätes an den tatsächlichen Heizbedarf ermöglicht, daß Energie und Energiekosten eingespart werden.
Da Über- und Unterdeckungen des Heizbedarfes vermieden werden, ist auch das Wohlbefinden der Benutzerperson innerhalb des aufzuheizenden Raumes gesteigert.

Die Ansprüche 2 bis 13 betreffen einen thermomechanischen Aufladeregler.

Anspruch 2 betrifft eine bevorzugte Anordnung und das Zusammenwirken von Baugliedern einer Aufladesteuerung. Das Zusammenwirken dieser Bauglieder ist teilweise in DIN 44574 beschrieben.

Gemäß Anspruch 3 erhält das Steuerelement eine Mehrzweckfunktion. Auf diese Weise wird der zusätzliche Bauteileaufwand zur Verarbeitung des Kompensationssignales gering gehalten. Die verbesserte Arbeitsweise des Aufladereglers ist deshalb sehr kostengünstig erreichbar.

Nach Anspruch 4 kann die Aufladesteuerung auf einfache und sichere Weise den veränderten Betrieb des Speicherheizgerätes registrieren. Hierbei bewirkt das Thermorelais eine Koppelung zwischen dem auch bei herkömmlichen Speicherheizgeräten vorhandenem Steuerelement und Gebläse. Diese Koppelung ist kostengünstig erhältlich und gleichzeitig technisch einfach aufgebaut. Der technisch einfache Aufbau erleichtert die genaue Arbeitsweise der Kompensationsvorrichtung. Ein Austausch oder eine Reparatur der Kompensationsvorrichtung ist problemlos möglich.
Die Schalterwirkung des Thermorelais erlaubt eine sichere Unterscheidung der Schaltzustände des Gebläses.

Die Ansprüche 5 bis 7 betreffen bevorzugte Ausführungsformen des Steuerelementes. Hierbei bewirkt die Zweiteiligkeit des Steuerelementes deren einfachen Aufbau. Die Steuerpatrone ist gemäß Anspruch 6 und 7 als Massenartikel kostengünstig erhältlich. Derartige Steuerpatronen wandeln Stromsignale auf einfache Weise in für den temperaturabhängigen Steuerfühler notwendige Wärmesignale um.

Gemäß Anspruch 8 ist das Steuerelement dazu geeignet, auf einfache Weise die Führungsgröße des Zentralsteuergerätes in ein Steuersignal für das Schaltwerk des Aufladereglers umzuwandeln.

Nach Anspruch 9 sind sämtliche Steuersignale für das Schaltwerk Wärmesignale. Das Schaltwerk muß nicht zwischen verschiedenen Signalarten unterscheiden und kann deshalb technisch einfach aufgebaut sein.

Anspruch 10 betrifft eine Doppelfunktion der Steuerpatrone. Danach dient sie gleichzeitig als Aufnehmer der Führungsgröße und des Kompensationssignals. Somit bleibt der technisch einfache Aufbau des Steuerelements mit wenigen Bauteilen erhalten.

Kompensationssignal und Führungsgröße werden gemäß Anspruch 11 jeweils in ein Wärmesignal umgewandelt. Dadurch ist keine getrennte Auswertung beider Signale erforderlich. Der temperaturabhängige Steuerfühler ist als Detektierelement für die Führungsgröße und das Kompensationssignal geeignet.

Deshalb ist für das Kompensationssignal kein separater Steuerfühler notwendig. Der erfindungsgemäße Aufladeregler kann deshalb mit nur unwesentlich größerem Kostenaufwand und Dimensionierungen hergestellt werden.

Gemäß Anspruch 12 kann der elektrische Strom dazu dienen, das Kompensationssignal in ein Wärmesignal umzuwandeln.
Die hierfür notwendige Verdrahtung zwischen Kompensationsvorrichtung und Steuerpatrone kann sehr kostengünstig auf einer Platine hergestellt werden.

Ein nach Anspruch 13 hydraulisch arbeitendes Schaltwerk des Aufladereglers nutzt in technisch einfacher Weise die als Wärmesignale wirksamen Steuersignale des Steuerfühlers und des Restwärmefühlers zum Steuern der Auf- bzw. Nachladung des Speicherheizgerätes aus.

Die Ansprüche 14 bis 21 betreffen einen elektronischen Aufladeregler.

Anspruch 14 betrifft eine bevorzugte Anordnung und Ausführungsform des elektronischen Aufladereglers.
Witterungsfühler und Zentralsteuergerät sind bekannte Bauglieder und in DIN 44574 beschrieben. Zentralsteuergerät und Schaltwerk sind miteinander durch ein elektronisches Schaltteil gekoppelt. Das Schaltteil kann platzsparend als elektrische Schaltung oder als Mikroprozessor mit ggf, weiteren Bausteinen aufgebaut werden. Die elektronische Verarbeitung von Führungsgröße und Kompensationssignal ist sehr genau und erfolgt in sehr kurzer Zeit. Dadurch kann der Aufladeregler auf veränderte Signale sehr schnell reagieren.
Fehlerhafte Bauteile innerhalb des Schaltteils können problemlos und kostengünstig ausgetauscht werden.

Gemäß Anspruch 15 und 16 ist das Schaltteil derart ausgelegt, daß je nach Betriebszustand des Gebläses und der Kompensationsvorrichtung das Schaltwerk die entsprechenden Steuersignale erhält.

Ein nach Anspruch 17 ausgestaltetes Schaltteil ermöglicht die Vorgabe eines Sollwertes durch eine Benutzerperson. Damit ist eine flexiblere Anpassung des Aufladereglers an veränderte Raumbedingungen möglich.

Anspruch 18 betrifft die Erzeugung des Steuersignals für das Schaltwerk.

Gemäß Anspruch 19 kann innerhalb des Schaltteils überprüft werden, ob der Aufladeregler in der gewünschten Weise arbeitet. Es ist denkbar, daß das Schaltteil bei negativem Prüfergebnis weitere Funktionen, z.B. einen Rücksetz-Impuls, auslöst. Auch ist es möglich, eine optische oder akustische Anzeige mit dem Schaltteil zu koppeln, um einer Benutzerperson mitzuteilen, ob das Speicherheizgerät geladen wird oder nicht.

Die Ansprüche 20 und 21 betreffen die Steuerung der Aufladung des Speicherheizgerätes durch das Schaltwerk.

Der Erfindungsgegenstand wird anhand der in den Figuren dargestellten Ausführungsbeispiele näher erläutert. Es zeigen:
- Fig. 1: eine schematische Darstellung des thermomechanischen Aufladereglers
- Fig 2: eine schematische Darstellung des elektronischen Aufladereglers.

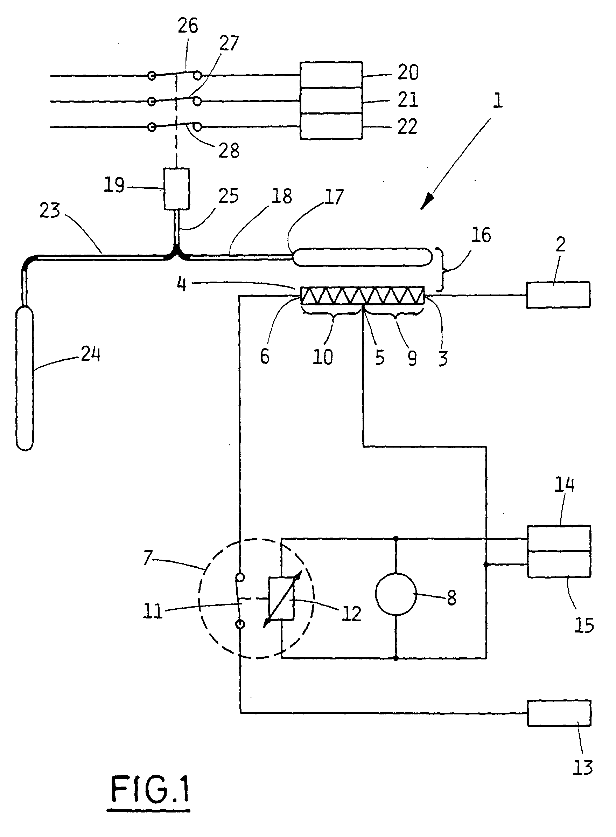

Der in Fig. 1 dargestellte thermomechanische Aufladeregler 1 erhält ein als Führungsgröße 2 wirksames Steuersignal von einem hier nicht dargestellten Zentralsteuergerät. Die Führungsgröße 2 ist außentemperaturabhängig und wird über einen Witterungsfühler und das Zentralsteuergerät dem Aufladeregler 1 zugeleitet.
Näheres zum Aufbau und der Funktionsweise einer Aufladesteuerung für Speicherheizgeräte mit einem Witterungsfühler, Zentralsteuergerät und weiteren Baugliedern ist DIN 44574 entnehmbar.

Die Führungsgröße 2 wird einem Patronengrundanschluß 3 einer Steuerpatrone 4 zugeleitet. Die Steuerpatrone 4 weist insgesamt drei Anschlüsse, nämlich den Patronengrundanschluß 3, eine Mittelanzapfung 5 und einen Patronenrestanschluß 6 auf. Die Anschlüsse 3,5,6 sind mit einer Kompensationsvorrichtung 7 und einem Gebläse 8 elektrisch leitend verbunden.

Die Steuerpatrone 4 kann als Widerstand oder als Wicklung mit der Mittelanzapfung 5 ausgebildet sein. Es ist z.B. auch denkbar, zwei separate Wicklungen zu verwenden, deren eine die Anschlüsse 3 und 5 aufweist und deren andere die Anschlüsse 3 und 6 aufweist. Der Widerstandsbereich zwischen dem Patronengrundanschluß 3 und der Mittelanzapfung 5 ist als Patronengrundbereich 9 wirksam. Der Widerstandsbereich zwischen der Mittelanzapfung 5 und dem Patronenrestanschluß 6 ist als Patronenrestbereich 10 wirksam.
Die Steuerkennlinie des Aufladereglers 1 ist durch den Widerstandswert der Steuerpatrone 4 charakterisiert. Der Patronengrundbereich 9 bildet den Steuerwiderstand für die Steuerung des Aufladereglers 1 aufgrund der von der Außentemperatur abhängigen Führungsgröße 2.
Der Patronenrestbereich 10 bildet den Steuerwiderstand für die Kompensation der Steuerkennlinie.

Die Kompensationsvorrichtung 7 ist hier schematisch als Thermorelais für die Kompensation der Steuerkennlinie dargestellt. Die Kompensationsvorrichtung 7 weist hier einen Relaisschalter 11 und einen mit ihm zusammenwirkenden temperaturabhängigen Bauelement, z.B. einen PTC 12, auf. Ein Anschluß des Relaisschalters 11 ist mit dem Patronenrestanschluß 6 verbunden. Der andere Anschluß des Relaisschalters 11 ist mit dem Schalteranschluß 13 verbunden. Der PTC 12 ist parallel zum Gebläse 8 geschaltet. Das Gebläse 8 wiederum ist mit den beiden Motoranschlüssen 14,15 verbunden. Der Motoranschluß 15 ist außerdem mit der Mittelanzapfung 5 elektrisch leitend verbunden.

Die Steuerpatrone 4 ist Teil eines wärmesensiblen Steuerelementes 16. Ein weiterer Bestandteil dieses Steuerelementes 16 ist ein temperaturabhäniger Steuerfühler 17.

Der Steuerfühler 17 ist über eine hydraulische Leitung 18 mit einem Schaltwerk 19 verbunden. Das Schaltwerk 19 dient dem elektrischen Anschluß und der elektrischen Trennung eines hier nicht dargestellten Wärme-Speicherheizgerätes von einem Drehstromnetz. Das Drehstromnetz ist hier schematisch durch die drei Phasenleitungen 20,21,22 dargestellt.

Das Schaltwerk 19 ist über eine weitere hydraulische Leitung 23 mit einem temperaturabhängigen Restwärmefühler 24 verbunden. Der Restwärmefühler 24 ist im Bereich des Speicherkerns des Speicherheizgerätes angeordnet und mißt den Wärmeinhalt des Speicherheizgerätes.
Die hydraulischen Leitungen 18,23 münden im Bereich des Schaltwerks 19 in eine gemeinsame Anschlußleitung 25. In den Leitungen 18,23 und der Anschlußleitung 25 befindet sich z.B. ein Gas oder eine Flüssigkeit. Je nach Erwärmung oder Abkühlung ziehen sich diese Stoffe zusammen oder dehnen sich aus. Das Schaltwerk 19 wird dadurch hydraulisch gesenkt oder angehoben und schaltet dadurch die drei den Phasenleitungen 20,21,22 zugeordneten Phasenschalter 26,27,28.
Bei ausgeschaltetem Gebläse 8 und durch den Relaisschalter 11 zwischen dem Patronenrestanschluß 6 und dem Schalteranschluß 13 unterbrochener Strombahn fließt der von der Führungsgröße 2 verursachte Strom über den Patronengrundbereich 9, die Mittelanzapfung 5 und den als Nulleiter wirksamen Motoranschluß 15 gegen Masse ab. Da der Relaisschalter 11 die ihm zugeordnete Strombahn unterbricht, fließt über den Patronenrestbereich 10 kein Strom. Im Patronenrestbereich 10 findet deshalb keine Umwandlung elektrischer Energie in zusätzliche Wärmeenergie für den Steuerfühler 17 statt. Bei eingeschaltetem Gebläse 8 wird das Wärme-Speicherheizgerät stärker entladen. Deshalb ist eine größere Nachladung des Speicherheizgerätes erforderlich. Aufgrund seiner besonderen Anordnung im Bereich des Speicherkerns reicht der Restwärmefühler 24 nicht aus, um die notwendige Nachladung des Speicherheizgerätes zu registrieren. Dadurch entsteht am Schaltwerk 19 ein fehlerhaftes Steuersignal. Diese Fehlinterpretation des Restwärmefühlers 24 wird durch zusätzliche Wärmezufuhr an den Steuerfühler 17 kompensiert.
Bei eingeschaltetem Gebläse 8 ist der PTC 12 nach einer bestimmten Zeit derart erwärmt, daß der Relaisschalter 11 geschaltet wird und die Strombahn zwischen dem Patronenrestanschluß 6 und dem Schalteranschluß 13 schließt.
Auf diese Weise fließt nun auch über den Patronenrestbereich 10 ein Strom, so daß die Steuerpatrone 4 zusätzliche Wärmeenergie an den Steuerfühler 17 abgeben kann.

In Öffnungsstellung des Relaisschalters 11 wird die Steuerkennlinie bei eingeschaltetem Gebläse 8 angehoben. In der Schließstellung des Relaisschalters 11 wird die Steuerkennlinie bei eingeschaltetem Gebläse 8 abgesenkt.

Die als Thermorelais ausgebildete Kompensationsvorrichtung 7 bewirkt auch die Kompensation der Steuerkennlinie für eine bestimmte Nachlaufzeit bei wieder abgeschaltetem Gebläse 8. Dies hat seine Ursache in dem temperaturabhängigen PTC 12. Auf diese Weise ist eine gleichmäßige Arbeitsweise des Aufladereglers 1 beim Ein- und Ausschalten des Gebläses 8 in kurzen Zeitintervallen gewährleistet. Bleibt das Gebläse 8 längere Zeit ausgeschaltet, so kühlt sich der PTC 12 so weit ab, daß die Strombahn zwischen dem Patronenrestanschluß 6 und dem Schalteranschluß 13 wieder unterbrochen wird. Der Aufladeregler 1 folgt dann wieder der nicht kompensierten Steuerkennlinie.

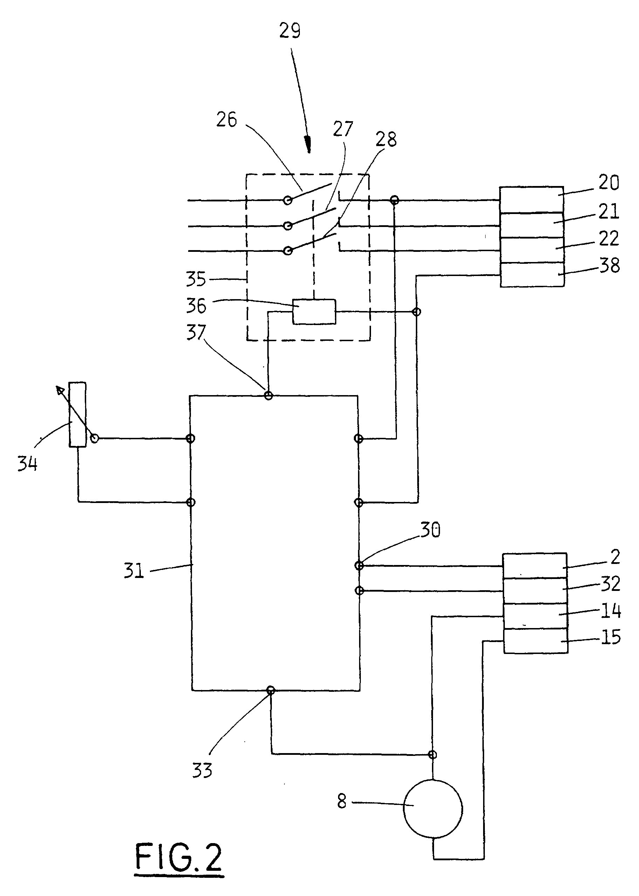

In Fig. 2 erhält ein elektronischer Aufladeregler 29 ebenfalls ein als Führungsgröße 2 wirksames Steuersignal von einem Zentralsteuergerät. Die Führungsgröße 2 wird an einem Führungsgrößeneingang 30 eines Schaltteils 31 eingespeist.
Das Schaltteil 31 ist z.B. als elektrische Schaltung oder als Mikroprozessor mit ggf. weiteren Bausteinen ausgebildet.

Ein der Führungsgröße 2 zugeordneter, als Bezugspegel 32 wirksamer Spannungspegel ist ebenfalls an einen Eingang des Schaltteils 31 angeschlossen.
Das Gebläse 8 ist analog zu Fig. 1 an einen als Phase wirksamen Motoranschluß 14 und einen als Nulleiter wirksamen Motoranschluß 15 angeschlossen. Ein Kennlinieneingang 33 des Schaltteils 31 ist ebenfalls mit dem Motoranschluß 14 verbunden. Bei laufendem Gebläse 8 erhält der Kennlinieneingang 33 ein entsprechendes Signal, so daß der elektronische Aufladeregler 29 entsprechend einer Kompensationskennlinie arbeitet.
Bei ausgeschaltetem Gebläse 8 folgt der Aufladeregler 29 einer Grundkennlinie. Diese beiden Kennlinien sind durch geeignete Linearisierungsschaltungen realisiert. Durch diese Linearisierungsschaltungen wird auch die Kompensation erzielt, so daß das Schaltverhalten des Aufladereglers 29 dem tatsächlichen Wärmeinhalt des Wärme-Speicherheizgerätes weitestgehend angenähert wird.
Eine Abschwächung bzw. Verstärkung des Kompensationseffektes innerhalb bestimmter Arbeitsbereiche des Aufladereglers 29 ist ebenfalls vorgesehen.

Weiterhin ist an das Schaltteil 31 ein Sollwertsteller 34 angeschlossen. Der Sollwertsteller 34 kann durch eine Benutzerperson verstellt werden. Dadurch kann ein Sollwert für die Aufladung des Wärme-Speicherheizgerätes vorgegeben werden. Ein Schaltwerk 35 entscheidet darüber, ob das in Fig. 2 nicht dargestelle Wärme-Speicherheizgerät aufgeladen wird oder von den Phasenleitungen 20,21,22 des Drehstromnetzes getrennt wird. Das Schaltwerk 35 ist schematisch als Thermorelais 36 dargestellt. Das Thermorelais 36 schaltet die den Phasenleitungen 20,21,22 zugeordneten Phasenschalter 26,27,28. Das Thermorelais 36 ist ist an einen Steuersignalanschluß 37 des Schaltteils 31 und an den den Phasenleitungen 20,21,22 zugeordneten Nulleiter 38 angeschlossen.
Abhängig vom an dem Steuersignalanschluß 37 anliegenden Steuersignal werden die Phasenschalter 26,27,28 durch das Thermorelais 36 ein- oder ausgeschaltet.

Das Steuersignal am Steuersignalanschluß 37 hängt von der Außentemperatur, der Restwärmetemperatur des Speicherkerns sowie von der Art der Kennlinie ab.

Die Phasenleitung 20 und der Nulleiter 38 sind mit zwei Eingängen des Schaltteils 31 verbunden. Auf diese Weise kann durch das Schaltteil 31 permanent geprüft werden, ob der Schaltzustand der Phasenschalter 26,27,28 mit dem Steuersignal am Steuersignalanschluß 37 übereinstimmt. Bei fehlender Übereinstimmung kann das Schaltteil 31 weitere Funktionen, z.B. eine optische oder akustische Fehlermeldung, auslösen. Auch kann die Überprüfung der Schaltstellung der Phasenschalter 26,27,28 dazu dienen, einen versehentlichen Ladevorgang durch weitere, hier nicht dargestellte Schaltmaßnahmen abzubrechen.

Die Phasenschalter 26,27,28 sind zunächst geöffnet. Das Gebläse 8 wird eingeschaltet, um den betreffenden Raum stärker zu beheizen. Der in Fig. 2 nicht dargestellte Restwärmefühler registriert die verstärkte Entladung des Wärme-Speicherheizgerätes nicht. Um jedoch das Schaltverhalten des Aufladereglers 29 dem tatsächlichen Wärmeinhalt des Wärme-Speicherheizgerätes weitestgehend anzupassen, wird durch das elektrische Signal am Kennlinieneingang 33 veranlaßt, daß der Aufladeregler 29 der Kompensationskennlinie folgt.
Eine gewisse Vorlauf- bzw. Nachlaufzeit zur Aktivierung bzw. Deaktivierung der Kompensationskennlinie entsprechend der Verzögerungswirkung der Kompensationsvorrichtung 7 (Fig. 1) ist durch den internen Schaltungsaufbau des Schaltteils 31 berücksichtigt. Auf diese Weise ist gewährleistet, daß der Aufladeregler 29 bei nur kurzzeitigem Ein- bzw. Ausschalten des Gebläses 8 nur einer Kennlinie folgt, so daß ein ständiges Hin- und Herschalten zwischen zwei Kennlinienverläufen verhindert wird.
Die Kompensationskennlinie ist als elektrische Schaltung innerhalb des Schaltteils 31 derart ausgebildet, daß am Steuersignalanschluß 37 ein entsprechendes Steuersignal anliegt.
Dieses Steuersignal veranlaßt, daß die Phasenschalter 26,27,28 geschlossen werden, damit das Wärme-Speicherheizgerät entsprechend der verstärkten Entladung nachgeladen wird.

Nach dem Abschalten des Gebläses 8 wird durch den Kennlinieneingang 33 veranlaßt, daß der Aufladeregler 29 nach Berücksichtigung der bereits erwähnten, innerhalb des Schaltteils 31 realisierten Nachlaufzeit, entsprechend der Grundkennlinie arbeitet. Ein entsprechendes Steuersignal am Steuersignalanschluß 37, welches allerdings auch von der Außentemperatur und der Restwärmetemperatur des Speicherkerns abhängig ist, veranlaßt das Thermorelais 36, die Phasenschalter 26,27,28 zu öffnen.

Beim thermomechanischen Aufladeregler 1 sowie beim elektronischen Aufladeregler 29 ist vorgesehen, den Einfluß des Gebläselaufes entsprechend dem Einschaltzustand von Gebläsemotor und/oder Heizkörpern zur Aufheizung des Speicherkerns bei Bedarf zusätzlich zu kompensieren.

### Bezugszeichenliste

- 1: Aufladeregler
- 2: Führungsgröße
- 3: Patronengrundanschluß
- 4: Steuerpatrone
- 5: Mittelanzapfung
- 6: Patronenrestanschluß
- 7: Kompensationsvorrichtung
- 8: Gebläse
- 9: Patronengrundbereich
- 10: Patronenrestbereich
- 11: Relaisschalter
- 12: PTC
- 13: Schalteranschluß
- 14: Motoranschluß
- 15: Motoranschluß
- 16: Steuerelement
- 17: Steuerfühler
- 18: Leitung
- 19: Schaltwerk
- 20: Phasenleitung
- 21: "
- 22: "
- 23: Leitung
- 24: Restwärmefühler
- 25: Anschlußleitung
- 26: Phasenschalter
- 27: "
- 28: "
- 29: Aufladeregler
- 30: Führungsgrößeneingang
- 31: Schaltteil
- 32: Bezugspegel
- 33: Kennlinieneingang
- 34: Sollwertsteller
- 35: Schaltwerk
- 36: Thermorelais
- 37: Steuersignalanschluß
- 38: Nulleiter

## Patentansprüche

1. Wärmespeicher-Heizgerät mit einer einen Aufladeregler (1) aufweisenden Aufladesteuerung zur Aufladung eines Speicherkerns in Abhängigkeit von dessen Wärmeinhalt und von einer außentemperaturabhängigen Führungsgröße (2) für ein Schaltwerk (19), und mit einem motorgetriebenen Gebläse (8) zur Wärmeabgabe des Speicherkerns, wobei beim Betrieb mit ausgeschaltetem Gebläse (8) das als außentemperaturabhängige Führungsgröße (2) wirksame Steuersignal an das Schaltwerk (19) abgegeben wird,
**dadurch gekennzeichnet,**
**daß** der Aufladeregler (1) bei eingeschaltetem Gebläse (8) zusätzlich zum als Führungsgröße wirksamen Steuersignal (2) und zu einem von einem Restwärmefühler (24) abgegebenen Steuersignal ein Kompensationssignal für ein fehlerhaftes Steuersignal des Restwärmefühlers (24) an das Schaltwerk (19) abgibt.

2. Speicherheizgerät nach Anspruch 1,
**gekennzeichnet durch**
- einen Witterungsfühler zur Erfassung des Außentemperaturwertes und zur Weitergabe des Außentemperaturwertes als elektrisches Signal,
- ein mit dem Witterungsfühler gekoppeltes Zentralsteuergerät zur Weiterverarbeitung des elektrischen Signals zu einer Führungsgröße
- ein die Führungsgröße verarbeitendes Steuerelement (16) und
- einen die Restwärme des Speicherkerns messenden Restwärmefühler (24), wobei
- das Steuerelement (16) und der Restwärmefühler (24) die Steuersignale (18,23) für das Schaltwerk (19) liefern.

3. Speicherheizgerät nach Anspruch 2,
**dadurch gekennzeichnet,**
**daß** bei eingeschaltetem Gebläse (8) das Steuerelement (16) zusätzlich zur Führungsgröße (2) das Kompensationssignal verarbeitet.

4. Speicherheizgerät nach Anspruch 3,
**gekennzeichnet durch**
ein von der Betriebsstellung des Gebläses (8) abhängiges Thermorelais als Kompensationsvorrichtung (7) zur Erzeugung des Kompensationssignals.

5. Speicherheizgerät nach den Ansprüchen 3 und 4,
**dadurch gekennzeichnet,**
**daß** das Steuerelement aus einem temperaturabhängigen Steuerfühler (17) und einer Steuerpatrone (4) besteht.

6. Speicherheizgerät nach Anspruch 5,
**dadurch gekennzeichnet,**
**daß** die Steuerpatrone (4) ein Widerstand ist.

7. Speicherheizgerät nach Anspruch 5,
**dadurch gekennzeichnet,**
**daß** die Steuerpatrone (4) eine Wicklung ist.

8. Speicherheizgerät nach einem der Ansprüche 5 bis 7,
**dadurch gekennzeichnet,**
- **daß** die Steuerpatrone (4) die Führungsgröße (2) in ein Wärmesignal umsetzt und
- **daß** der Steuerfühler (17) dieses Wärmesignal als Steuersignal (18) an das Schaltwerk (19) abgibt.

9. Speicherheizgerät nach einem der vorhergehenden Ansprüche,
**dadurch gekennzeichnet,**
**daß** die Steuersignale (18,23) für das Schaltwerk (19) Wärmesignale sind.

10. Speicherheizgerät nach einem der vorhergehenden Ansprüche,
**gekennzeichnet durch**
eine Zweiteilung der Steuerpatrone (4) derart,
- daß ein Patronengrundbereich (9) permanent als Bindeglied zwischen Zentralsteuergerät und Steuerfühler (17) wirksam ist und
- daß ein Patronenrestbereich (10) zuschaltbar ist, wobei bei zugeschaltetem Patronenrestbereich (10) die Steuerpatrone (4) als Bindeglied sowohl zwischen Zentralsteuergerät und Steuerfühler (17) als auch zwischen Kompensationsvorrichtung (7) und Steuerfühler (17) wirksam ist.

11. Speicherheizgerät nach einem der vorhergehenden Ansprüche,
**dadurch gekennzeichnet,**
**daß** die Steuerpatrone (4) ausschließlich Wärmesignale an den Steuerfühler (17) abgibt.

12. Speicherheizgerät nach einem der vorhergehenden Ansprüche,
**dadurch gekennzeichnet,**
**daß** die Steuerpatrone (4) mit der Kompensationsvorrichtung (7) über eine elektrische Leitung verbunden ist.

13. Speicherheizgerät nach einem der vorhergehenden Ansprüche,
**dadurch gekennzeichnet,**
**daß** das Schaltwerk (19) die Ein-/Ausschalter (26,27,28) der Anschlußleitungen (20,21,22) des Speicherheizgerätes hydraulisch schaltet.

14. Speicherheizgerät nach Anspruch 1,
**gekennzeichnet durch**
- einen Witterungsfühler zur Erfassung des Außentemperaturwertes und zur Weitergabe des Außentemperaturwertes als elektrisches Signal,
- ein mit dem Witterungsfühler gekoppeltes Zentralsteuergerät zur Weiterverarbeitung des elektrischen Signals zu einer Führungsgröße (2),
- ein die Führungsgröße (2) verarbeitendes elektronisches Schaltteil (31) und
- einen das Steuersignal für das Schaltwerk (35) in Abhängigkeit von der Restwärmetemperatur des Speicherkerns abgebender Steuersignalanschluß (37).

15. Speicherheizgerät nach Anspruch 14,
**dadurch gekennzeichnet,**
- **daß** das Schaltteil (31) einer Grundkennlinie folgend bei ausgeschaltetem Gebläse (8) und abgeschalteter Kompensationsvorrichtung (7) arbeitet und
- **daß** bei eingeschaltetem Gebläse (8) und eingeschalteter Kompensationsvorrichtung (7) das Schaltteil (31) einer Kompensationskennlinie folgend arbeitet.

16. Speicherheizgerät nach Anspruch 15,
**dadurch gekennzeichnet,**
**daß** die Kompensationskennlinie nach dem Einschalten des Gebläses (8) aktiviert ist.

17. Speicherheizgerät nach einem der vorhergehenden Ansprüche,
**dadurch gekennzeichnet,**
**daß** ein Sollwertsteller (34) zur Einstellung der Soll-Ladung an das Schaltteil (31) angeschlossen ist.

18. Speicherheizgerät nach einem der vorhergehenden Ansprüche,
**dadurch gekennzeichnet,**
- **daß** das Steuersignal für das Schaltwerk (35) von den Parametern Außentemperatur, Restwärmetemperatur des Speicherkerns und Art der Kennlinie determiniert ist und
- **daß** das Schaltteil (31) die Parameter zu dem Steuersignal verarbeitet.

19. Speicherheizgerät nach einem der vorhergehenden Ansprüche,
**gekennzeichnet durch**
eine Prüffunktion des Schaltteils (31) auf Prüfung des momentanen Schaltzustandes des Schaltwerks (35).

20. Speicherheizgerät nach einem der vorhergehenden Ansprüche,
**dadurch gekennzeichnet,**
**daß** das Schaltwerk die Ein-/Ausschalter (26,27,28) der Anschlußleitungen (20,21,22) des Speicherheizgerätes schaltet.

21. Speicherheizgerät nach Anspruch 20,
**dadurch gekennzeichnet,**
**daß** das Schaltwerk (35) ein Thermorelais (36) ist.

## Claims

1. Storage heater having a charge control system, which has a charging regulator (1), for charging a storage core as a function of its heat content and of a reference variable (2), which is dependent on the outside temperature, for a switching mechanism (19), and having a motor-driven fan (8) for heat emission from the storage core, in which case the control signal, which acts as the reference variable (2) which is dependent on the outside temperature, being emitted to the switching mechanism (19) during operation when the fan (8) is switched off,
**characterized**
**in that**, when the fan (8) is switched on, the charging regulator (1) emits to the switching mechanism (19) not only the control signal (2) which acts as the reference variable and a control signal which is emitted from a residual heat sensor (24), but also a compensation signal for an incorrect control signal from the residual heat sensor (24).

2. Storage heater according to Claim 1,
**characterized by**
- a weather sensor for detecting the outside temperature value and for passing on the outside temperature value as an electrical signal,
- a central controller, which is coupled to the weather sensor, for further-processing the electrical signal to form a reference variable,
- a control element (16) which processes the reference variable, and
- a residual heat sensor (24) which measures the residual heat in the storage core, in which case
- the control element (16) and the residual heat sensor (24) supply the control signals (18, 23) for the switching mechanism (19).

3. Storage heater according to Claim 2,
**characterized**
**in that**, when the fan (8) is switched on, the control element (16) processes the compensation signal in addition to the reference variable (2).

4. Storage heater according to Claim 3,
**characterized by**
a thermal relay, which is dependent on the operating position of the fan (8), as a compensation apparatus (7) for producing the compensation signal.

5. Storage heater according to Claims 3 and 4,
**characterized**
**in that** the control element comprises a temperature-dependent control sensor (17) and a control cartridge (4).

6. Storage heater according to Claim 5,
**characterized**
**in that** the control cartridge (4) is a resistor.

7. Storage heater according to Claim 5,
**characterized**
**in that** the control cartridge (4) is a winding.

8. Storage heater according to one of Claims 5 to 7,
**characterized**
- **in that** the control cartridge (4) converts the reference variable (2) to a heat signal, and
- **in that** the control sensor (17) emits this heat signal as the control signal (18) to the switching mechanism (19).

9. Storage heater according to one of the preceding claims,
**characterized**
**in that** the control signals (18, 23) for the switching mechanism (19) are heat signals.

10. Storage heater according to one of the preceding claims,
**characterized by**
the control cartridge (4) being split in two in such a manner
- that a cartridge basic region (9) permanently acts as a linking element between the central controller and the control sensor (17), and
- in that a cartridge remaining region (10) can be connected, with the control cartridge (4) acting as a linking element both between the central controller and the control sensor (17) and between the compensation apparatus (7) and the control sensor (17) when the cartridge residual region (10) is connected.

11. Storage heater according to one of the preceding claims,
**characterized**
**in that** the control cartridge (4) emits only heat signals to the control sensor (17).

12. Storage heater according to one of the preceding claims,
**characterized**
**in that** the control cartridge (4) is connected to the compensation apparatus (7) via an electrical line.

13. Storage heater according to one of the preceding claims,
**characterized**
**in that** the switching mechanism (19) hydraulically switches the on/off switches (26, 27, 28) of the connecting lines (20, 21, 22) of the storage heater.

14. Storage heater according to Claim 1,
**characterized by**
- a weather sensor for detecting the outside temperature value and for passing on the outside temperature value as an electrical signal,
- a central controller, which is coupled to the weather sensor, for further-processing the electrical signal to form a reference variable (2),
- an electronic switching section (31) which processes the reference variable (2), and
- a control signal connection (37) which emits the control signal for the switching mechanism (35) as a function of the residual heat temperature of the storage core.

15. Storage heater according to Claim 14,
**characterized**
- **in that** the switching section (31) uses a basic characteristic for processing when the fan (8) is switched off and the compensation apparatus (7) is switched off, and
- **in that** the switching section (31) uses a compensation characteristic for processing when the fan (8) is switched on and the compensation apparatus (7) is switched on.

16. Storage heater according to Claim 15,
**characterized**
**in that** the compensation characteristic is activated after the fan (8) has been switched on.

17. Storage heater according to one of the preceding claims,
**characterized**
**in that** a set-value controller (34) is connected to the switching section (31) in order to set the nominal charge.

18. Storage heater according to one of the preceding claims,
**characterized**
- **in that** the control signal for the switching mechanism (35) is determined by the outside temperature, the residual heat temperature of the storage core and the nature of the characteristic as parameters, and
- **in that** the switching section (31) processes the parameters to form the control signal.

19. Storage heater according to one of the preceding claims,
**characterized by**
a test function of the switching section (31) in order to check the instantaneous switching state of the switching mechanism (35).

20. Storage heater according to one of the preceding claims,
**characterized**
**in that** the switching mechanism switches the on/off switches (26, 27, 28) of the connecting lines (20, 21, 22) of the storage heater.

21. Storage heater according to Claim 20,
**characterized**
**in that** the switching mechanism (35) is a thermal relay (36).

## Revendications

1. Installation de chauffage par accumulation comportant un dispositif de commande de charge comprenant un régulateur de charge (1) pour la charge d'un coeur d'accumulation en fonction de sa capacité calorifique et d'une grandeur de commande (2) qui dépend de la température extérieure pour un dispositif de commutation (19) et un ventilateur (8) entraîné par un moteur pour distribuer la chaleur du coeur d'accumulation, étant entendu que, pendant le fonctionnement, lorsque le ventilateur (8) est débranché, le signal de commande jouant le rôle de grandeur de commande (2) qui dépend de la température extérieure est envoyé au dispositif de commutation (19),
**caractérisée en ce que**
lorsque le ventilateur (8) est branché, le régulateur de charge envoie au dispositif de commutation (19) un signal de compensation pour un signal de commande incorrect d'un détecteur de chaleur résiduelle (24), en plus du signal de commande (2) jouant le rôle de grandeur de commande et d'un signal de commande envoyé par le détecteur de chaleur résiduelle (24).

2. Installation de chauffage par accumulation selon la revendication 1,
**caractérisée par**
- un détecteur d'intempérie pour déterminer la valeur de la température extérieure et pour transmettre la valeur de la température extérieure sous forme de signal électrique,
- un dispositif de commande centralisée couplé au détecteur d'intempérie pour convertir le signal électrique en une grandeur de commande,
- un élément de commande (16) qui traite la grandeur de commande, et
- un détecteur de chaleur résiduelle (24) qui mesure la chaleur résiduelle du coeur d'accumulation,
- l'élément de commande (16) et le détecteur de chaleur résiduelle (24) fournissant les signaux de commande (18, 23) pour le dispositif de commutation (19).

3. Installation de chauffage par accumulation selon la revendication 2,
**caractérisée en ce que**, lorsque le ventilateur (8) est branché, l'élément de commande (16) traite le signal de compensation en plus de la grandeur de commande (2).

4. Installation de chauffage par accumulation selon la revendication 3,
**caractérisée par** un relais électrothermique qui dépend de la position de fonctionnement du ventilateur (8) et qui joue le rôle de dispositif de compensation (7) pour produire le signal de compensation.

5. Installation de chauffage par accumulation selon les revendications 3 et 4, **caractérisée en ce que** l'élément de commande consiste en un détecteur de commande (17) qui dépend de la température et en une cartouche de commande (4).

6. Installation de chauffage par accumulation selon la revendication 5, **caractérisée en ce que** la cartouche de commande (4) est une résistance.

7. Installation de chauffage par accumulation selon la revendication 5, **caractérisée en ce que** la cartouche de commande (4) est un bobinage.

8. Installation de chauffage par accumulation selon l'une des revendications 5 à 7, **caractérisée en ce que** :
- la cartouche de commande (4) convertit la grandeur de commande (2) en un signal thermique et **en ce que**
- le détecteur de commande (17) fournit ce signal thermique au dispositif de commutation (19) sous forme d'un signal de commande (18).

9. Installation de chauffage par accumulation selon l'une des revendications précédentes, **caractérisée en ce que** les signaux de commande (18, 23) pour le dispositif de commutation (19) sont des signaux thermiques.

10. Installation de chauffage par accumulation selon l'une des revendications précédentes, **caractérisée par** une division en deux parties de la cartouche de commande (4) de telle manière
- qu'un domaine de base (9) de la cartouche est constamment actif en tant qu'élément de liaison entre le dispositif de commande centralisée et le détecteur de commande (17) et
- qu'un domaine résiduel (10) de la cartouche peut être mis en circuit, auquel cas la cartouche de commande (4) est active en tant qu'élément de liaison aussi bien entre le dispositif de commande centralisée et le détecteur de commande (17) qu'entre le dispositif de compensation (7) et le détecteur de commande (17).

11. Installation de chauffage par accumulation selon l'une des revendications précédentes, **caractérisée en ce que** la cartouche de commande (4) envoie au détecteur de commande (17) exclusivement des signaux thermiques.

12. Installation de chauffage par accumulation selon l'une des revendications précédentes, **caractérisée en ce que** la cartouche de commande (4) est reliée au dispositif de compensation (7) par une conduite électrique.

13. Installation de chauffage par accumulation selon l'une des revendications précédentes, **caractérisée en ce que** le dispositif de commutation (19) met en circuit par voie hydraulique les disjoncteurs à deux positions (26, 27, 28) des conduites de raccordement (20, 21, 22) de l'installation de chauffage par accumulation.

14. Installation de chauffage par accumulation selon la revendication 1, **caractérisé par** :
- un détecteur d'intempérie pour déterminer la valeur de température extérieure et pour transmettre la valeur de la température extérieure sous forme de signal électrique,
- un dispositif de commande centralisée couplé au détecteur d'intempérie pour convertir le signal électrique en une grandeur de commande (2),
- un élément de commutation électronique (31) qui traite la grandeur de commande (2) et
- un branchement de signal de commande (37) qui délivre le signal de commande pour le dispositif de commutation (35) en fonction de la température de chaleur résiduelle du coeur d'accumulation.

15. Installation de chauffage par accumulation selon la revendication 14, **caractérisée en ce que**
- l'élément de commutation (31) fonctionne selon une caractéristique de base lorsque le ventilateur (8) et le dispositif de compensation (7) sont débranchés, et **en ce que**
- l'élément de commutation (31) fonctionne selon une caractéristique de compensation lorsque le ventilateur (8) et le dispositif de compensation (7) sont branchés.

16. Installation de chauffage par accumulation selon la revendication 15, **caractérisée en ce que** la caractéristique de compensation est activée après la mise en circuit du ventilateur (8).

17. Installation de chauffage par accumulation selon l'une des revendications précédentes, **caractérisée en ce qu'**un ajusteur de valeur de consigne (34) est raccordé à l'élément de commutation (31) pour ajuster la charge de consigne.

18. Installation de chauffage par accumulation selon l'une des revendications précédentes, **caractérisée en ce que** :
- le signal de commande pour le dispositif de commutation (35) est déterminé sur la base des paramètres température extérieure, température de chaleur résiduelle du coeur d'accumulation et type de caractéristique, et **en ce que** :
- l'élément de commutation (31) convertit les paramètres en le signal de commande.

19. Installation de chauffage par accumulation selon l'une des revendications précédentes, **caractérisée par** une fonction de vérification de l'élément de commutation (31) pour vérifier l'état de commutation instantané du dispositif de commutation (35).

20. Installation de chauffage par accumulation selon l'une des revendications précédentes, **caractérisée en ce que** le dispositif de commutation met en circuit les disjoncteurs à deux positions (26, 27, 28) des conduites de raccordement (20, 21, 22) de l'installation de chauffage par accumulation.

21. Installation de chauffage par accumulation selon la revendication 20, **caractérisée en ce que** le dispositif de commutation (35) est un relais électrothermique (36).
